# EUROPÄISCHE PATENTANMELDUNG

(11) **EP 0 904 822 A2**
(43) Veröffentlichungstag der Anmeldung: **31.03.1999**
(21) Anmeldenummer: 98107933.8
(22) Anmeldetag: 30.04.1998
(51) Int. Cl.: B01D 46/52, B01D 46/10

(54) **Filtereinsatz**

(30) Priorität: 25.09.1997 DE 19742271
(71) Anmelder: Firma Carl Freudenberg, 69469 Weinheim (DE)
(72) Erfinder: Brandhofer, Andreas, 69488 Birkenau (DE); Schroth, Thomas, 67240 Bobenheim-Roxheim (DE); Knudsen, Jörgen, 74918 Angelbachtal (DE); Schmidt, Wolfgang, 69514 Laudenbach (DE)

(57) **Zusammenfassung**

Filtereinsatz, umfassend einen Rahmen (1) aus zähhartem Werkstoff, der einen Faltenpack (2) umfangsseitig dichtend umschließt, wobei der Rahmen (1) aus zusammensteckbaren, plattenförmigen Rahmenelementen (1.1, 1.2, ...) besteht und mit einem entlang der Unter- (3) und/ oder Oberkante (4) umfangsseitig umlaufenden Schwert (5) versehen ist, und wobei das Schwert (5) und ein gitterförmiger Halter (6) durch ein Dichtmittel (7) dichtend aneinander festlegbar sind. Das Schwert (5) ist durch leistenförmige Schwertelemente (5.1, 5.2, ...) gebildet, wobei jedes Schwertelement (5.1, 5.2, ...) mit einem Rahmenelement (1.1, 1.2, ...) verbunden ist und wobei die einander benachbarten Enden (8, 9) der Schwertelemente (5.1, 5.2, ...) durch Verbindungsecken (10) dichtend aneinander festgelegt sind.

## Beschreibung

### Technisches Gebiet

Die Erfindung betrifft einen Filtereinsatz, umfassend einen Rahmen aus zähhartem Werkstoff, der einen Faltenpack umfangsseitig dichtend umschließt, wobei der Rahmen aus zusammensteckbaren, plattenförmigen Rahmenelementen besteht und mit einem entlang der Unter- und/ oder Oberkante umfangsseitig umlaufenden Schwert versehen ist, das in einem gitterförmigen Halter von U-förmigem Profil eintauchbar und darin durch ein zähflüssiges Dichtmittel festlegbar ist.

### Stand der Technik

Ein solcher Filtereinsatz ist bekannt und gelangt beispielsweise als Luftfilter in Reinräumen zur Anwendung, in denen Mikrochips hergestellt werden. Das Schwert des vorbekannten Filtereinsatzes ist dabei einstückig und herstellungsbedingt eben ausgebildet, wobei das ebene Schwert an die Form des Rahmens angepaßt wird. Die beiden einander benachbarten Enden des Schwerts werden aneinander gestoßen und dichtend verklebt. Bei dem zuvor genannten Filtereinsatz ist von Nachteil, daß beschichtete oder eloxierte Werkstoffe zur Herstellung des Schwerts nur mit großen Schwierigkeiten zu verarbeiten sind. Es ist außerdem von Nachteil, daß die im Bereich ihres Stoßes miteinander verklebten Enden des Schwertes nur eine geringe mechanische Festigkeit aufweisen. Die Verklebung der beiden Enden kann während der Montage des Filtereinsatzes auf den Halter leicht zerstört werden.

### Darstellung der Erfindung

Der Erfindung liegt die Aufgabe zugrunde, einen Filtereinsatz der vorbekannten Art derart weiterzuentwickeln, daß das Schwert auch aus beschichteten oder eloxierten Werkstoffen bestehen kann und daß die dichtende Verbindung der Enden des Schwerts eine verbesserte Haltbarkeit und Dichtigkeit aufweist.

Diese Aufgabe wird mit den Merkmalen von Anspruch 1 gelöst. Auf vorteilhafte Ausgestaltungen nehmen die Unteransprüche Bezug.

Zur Lösung der Aufgabe ist es vorgesehen, daß das Schwert durch leistenförmige Schwertelemente gebildet ist, daß jedes Schwertelement mit einem Rahmenelement verbunden ist und daß die einander benachbarten Enden der Schwertelemente durch Verbindungsecken dichtend aneinander festgelegt sind.

Dadurch, daß sich bei dem erfindungsgemäßen Filtereinsatz das Schwert nicht gebogen und bandförmig entlang des gesamten Rahmens erstreckt, sondern aus mehreren Schwertelementen besteht, die jeweils für sich betrachtet eben ausgebildet sind, können diese beispielsweise beschichtet oder eloxiert sein, was insbesondere im Hinblick auf die Verwendung des Filtereinsatzes in Reinräumen von Vorteil ist. Durch die Verwendung der Verbindungsecken zum verbinden der einander benachbarten Enden der Schwertelemente, ist eine hohe mechanische Festigkeit in diesem Bereich gegeben, die der Festigkeit eines einstückig ausgebildeten, gebogenen Schwerts entspricht.

Gemäß einer ersten Ausgestaltung können die Rahmenelemente und die Schwertelemente einstückig ineinander übergehend und materialeinheitlich ausgebildet sein. Hierbei ist von Vorteil, daß die Montage des Filtereinsatzes besonders einfach ist, da es einer separaten Montage der Schwertelemente an den Rahmenelementen nicht bedart. Außerdem ist von Vorteil, daß sich durch die herstellungsbedingt einstückige Ausgestaltung der Rahmenelemente mit den Schwertelementen automatisch ein dichte Verbindung zwischen den beiden Teilen ergibt.

Nach einer anderen Ausgestaltung besteht die Möglichkeit, daß die Schwertelemente separat von den Rahmenelementen erzeugt und mit der Unter- und/ oder Oberkante der Rahmenelemente dichtend verbunden sind. Die Unter- und/ oder Oberkante kann eine entgegen dem Faltenpack offene Nut aufweisen, wobei die Schwertelemente dichtend in den Nuten angeordnet sind. Die Nuten können eine zähharte Vergußmasse zur Anbindung der Schwertelemente enthalten. Hierbei ist von Vorteil, daß die Rahmenelemente und die Schwertelemente nach dem Baukastenprinzip miteinander kombiniert werden können. Beispielsweise kann ein Rahmen, mit unterschiedlich hohen Schwertern kombiniert werden, um den gesamten Filtereinsatz derart zu gestalten, daß er in unterschiedliche Halter eingesetzbar ist. Die zähharte Vergußmasse kann beispielsweise aus Polyurethan bestehen und umschließt die den Rahmenelementen zugewandte Seite der Schwertelemente dichtend.

Die Verbindungsecken können ein im wesentlichen U-förmiges Profil aufweisen und die Schwertelemente auf der den Rahmenelementen abgewandten Seite umgreifen. Durch eine derartige Ausgestaltung ist die exakte räumliche Zuordnung der Enden einander benachbarter Schwertelemente besonders einfach möglich.

Bevorzugt bestehen die Verbindungsecken aus einem polymeren Werkstoff und sind mit einem Dichtmittel zumindest teilweise ausgefüllt. Das Dichtmittel, mit dem die Verbindungsecken ausgefüllt sind, kann dem Dichtmittel entsprechen, das zwischen dem Halter und dem Schwert zur Anwendung gelangt. Der Halter kann dabei gitterförmig ausgestaltet sein. In die mit dem Dichtmittel ausgefüllten Verbindungsecken werden die Schwertelemente eingefügt und im Bereich ihrer einander benachbarten Enden aneinander gestoßen. Durch das Dichtmittel werden die Enden dichtend miteinander verklebt, wobei das Dichtmittel während der gesamten Gebrauchsdauer des Filtereinsatzes stets elastisch bleibt.

Nach einer anderen Ausgestaltung besteht die Möglichkeit, daß die Verbindungsecken zunächst auf die Enden der Schwertelemente aufgesteckt werden und im Anschluß daran ein Dichtmittel eingespritzt wird, das die innerhalb der Verbindungsecken positionierten Enden der Schwertelemente dichtend miteinander verbindet.

Die Verbindungsecken können voneinander abweichende Schenkellängen aufweisen, wobei der kürzere Schenkel auf der dem Faltenpack abgewandten außenseitigen Begrenzungswandung der Nut aufliegt und als Anschlag zur Positionierung des Schwertelements in der Nut des Rahmenelements ausgebildet ist und wobei der längere Schenkel in die Nut hineinragt und dichtend von der Vergußmasse umschlossen ist. Für Ausführungen des Filtereinsatzes, bei denen die Schwertelemente separat von den Rahmenelementen erzeugt und mit diesen dichtend verbunden sind, ist eine derartige Ausgestaltung von hervorzuhebendem Vorteil, da die räumliche Zuordnung der Schwertelemente zu den Rahmenelementen besonders exakt ist. Außerdem ist durch die Ausgestaltung der Verbindungsecken sichergestellt, daß der längere Schenke stets in die Nut hineinragt und dadurch von der Vergußmasse dichtend umschlossen ist. Durch den kürzeren Schenkel, der als Anschlag ausgebildet ist und auf der außenseitigen Begrenzungswandung der Nut aufliegt, sind Montagefehler des Filtereinsatzes auf ein Minimum begrenzt.

Die Schwertelemente sind von den Schenkeln der Verbindungsecken unter elastischer Vorspannung anliegend berührt. Bestehen die Verbindungsecken aus einem polymeren Werkstoff, schrumpft das Material herstellungsbedingt während seiner Verfestigung und Erkaltung. Durch den Schrumpf legen sich die Schenkel mit ihren einander zugewandten Seiten aneinander an. Zur Montage mit den Schwertelementen werden die Schenkel elastisch verformt und soweit auseinander gezogen, daß die Verbindungsecken auf die einander benachbarten Enden der Schwertelemente aufschiebbar sind. Durch die elastische Vorspannung, mit der die Verbindungsecken die Schwertelemente anliegend berühren, ist von Vorteil, daß die Schwertelemente und die Verbindungsecken eine vormontierte Einheit bilden. Das gesamte Schwert wird durch die Verbindungsecken zusammengehalten, wobei die so gebildete, vormontierbare Einheit in die Nut der Rahmenelemente eingesetzt und anschließend durch die Vergußmasse mit dem Rahmen dichtend verbunden wird.

Gelangt der Filtereinsatz als Luftfilter in Reinräumen zur Anwendung, ist von Vorteil, wenn die Schwertelemente aus eloxiertem Aluminium bestehen. Bevorzugt besteht auch der Rahmen aus eloxiertem Aluminium. Die Eloxierung des Aluminiums ist deshalb erforderlich, um während einer besonders langen Gebrauchsdauer sicher zu stellen, daß es nicht zur Ablösung von oxydationsbedingten Feinstauben kommen kann. Insbesondere im Bereich der Produktion als Verarbeitung von Halbleitern bestehen diesbezüglich extrem hohe Sicherheitsstandards.

### Kurzbeschreibung der Zeichnung

Der erfindungsgemäße Filtereinsatz wird nachfolgend anhand der Figuren näher erläutert. Diese zeigen in schematischer Darstellung:
- In Figur 1:: Einen Schnitt durch ein Ausführungsbeispiel eines erfindungsgemäßen Filtereinsatzes im Bereich von einer Ecke, der als Luftfilter in der Decke eines Reinluftraums zur Anwendung gelangt und auf einem gitterförmigen Halter angeordnet ist. Die Rahmenelemente und die Schwertelemente sind einstückig ineinanderübergehend und materialeinheitlich ausgebildet.
- In Figur 2:: Einen Filtereinsatz, ähnlich wie der Filtereinsatz aus Figur 1, wobei die Rahmenelemente und die Schwertelemente jeweils separat erzeugt und anschließend dichtend miteinander verbunden sind.
- In Figur 3:: Ein Ausführungsbeispiel eines Verbindungsecks aus Figur 1 im Schnitt.
- In Figur 4:: Einen vergrößerten Ausschnitt aus einer räumlichen Ansicht, wobei das Verbindungseck zwei Schwertelemente verbindet.

### Ausführung der Zeichnung

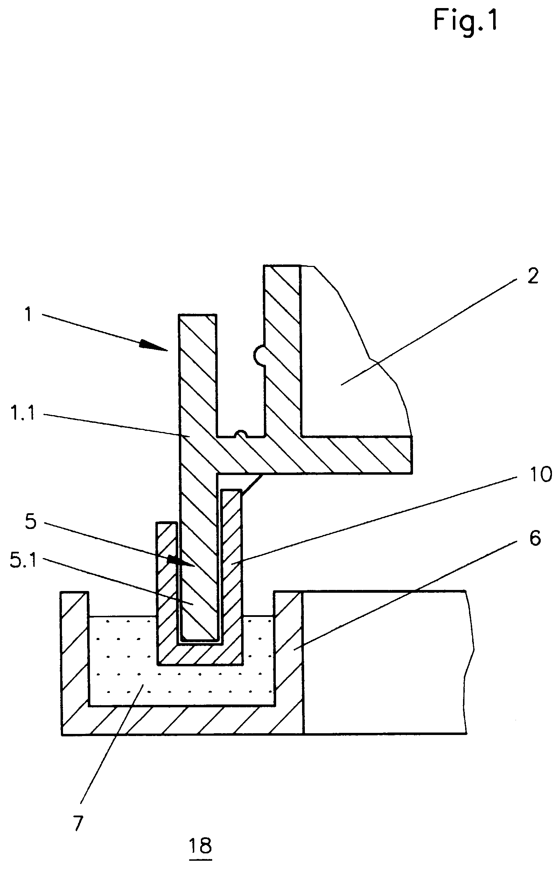

In Figur 1 ist ein Filtereinsatz gezeigt, der auf einem gitterförmigen Halter 6 angeordnet ist und die Deckenverkleidung eines Reinluftraums 18 bildet. Der Filtereinsatz besteht im wesentlichen aus einem Faltenpack 2, der von einem Rahmen 1 umschlossen ist, wobei der Rahmen 1 auf der dem Halter 6 zugewandten Seite mit dem Schwert 5 versehen ist. Der Rahmen 1 und das Schwert 5 bestehen in diesem Ausführungsbeispiel aus eloxiertem Aluminium, der Faltenpack 2 aus einem Vliesstoff.

Der Rahmen 1 besteht in diesem Ausführungsbeispiel aus vier zusammensteckbaren, plattenförmigen Rahmenelementen 1.1, ..., 1.4, die rechtwinklig zueinander angeordnet sind und den Faltenpack umfangsseitig dichtend umschließen. Die Rahmenelemente 1.1, ..., 1.4 und die Schwertelemente 5.1, ..., 5.4 sind einstückig ineinanderübergehend und materialeinheitlich ausgebildet, wobei die einander benachbarten Enden 8, 9 der Schwertelemente 5.1, ..., 5.4 durch Verbindungsecken 10 dichtend miteinander zusammengefügt sind.

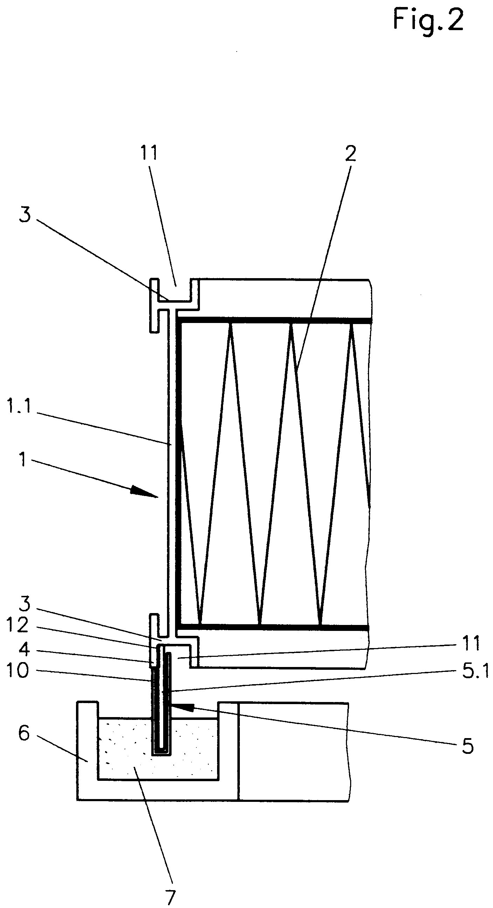

In Figur 2 ist ein Filtereinsatz gezeigt, der im wesentlichen dem Filtereinsatz aus Figur 1 entspricht, wobei die Rahmenelemente 1.1, ..., 1.4 und die Schwertelemente 5.1, ..., 5.4 jedoch jeweils separat erzeugt und anschließend dichtend miteinander verbunden werden. In diesem Beispiel ist die Unterkante 3 der Rahmenelemente 1.1, ..., 1.4 mit einer entgegen dem Faltenpack 2 offenen Nut 11 versehen, wobei die Schwertelemente 5.1, ..., 5.4 auf der dem Faltenpack 2 zugewandten Seite in die Nut 11 hineinragen und durch eine in der Nut 11 befindliche Vergußmasse dichtend mit den Rahmenelementen 1.1, ..., 1.4 verbunden sind.

In den Figuren 1 und 2 ist das aus den Schwertelementen 5.1, ..., 5.4 bestehende Schwert 5 innerhalb des gitterförmigen, im wesentlichen U-förmigen Halters 6 gehalten. Der U-förmige Querschnitt ist mit einem pastösen Dichtmittel 7 ausgefüllt, daß das Schwert 5 dichtend umschließt, beispielsweise mit Vaseline, Fett, einem Polyurethan oder Silikongel.

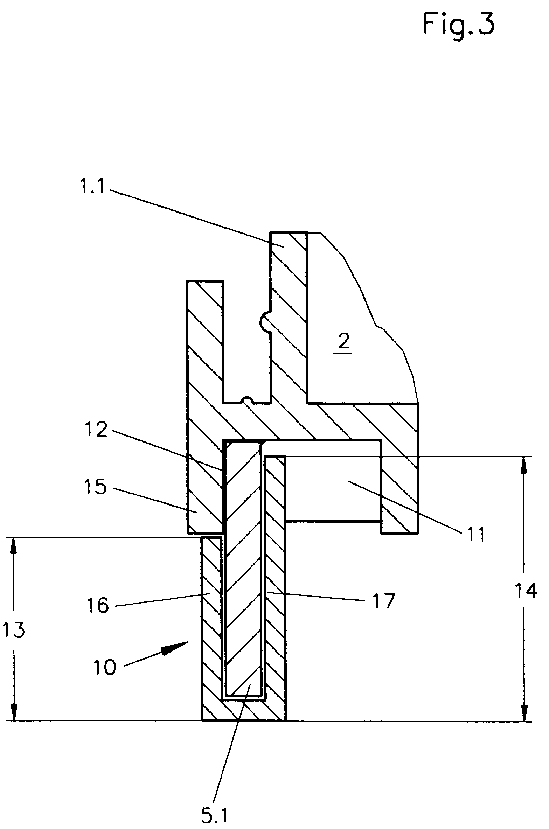

In Figur 3 ist eine der Verbindungsecken 10 im Schnitt gezeigt. Es ist zu erkennen, daß die Verbindungsecke 10 ein im wesentlichen U-förmiges Profil aufweist, wobei der äußere Schenkel 16 kürzer ist als der innere Schenkel 17. Die Verbindungsecke 10 besteht aus einem polymeren Werkstoff, wobei die Schenkel 16, 17 durch Schrumpf herstellungsbedingt mit den einander zugewandten Seiten unter elastischer Vorspannung aneinander anliegen.

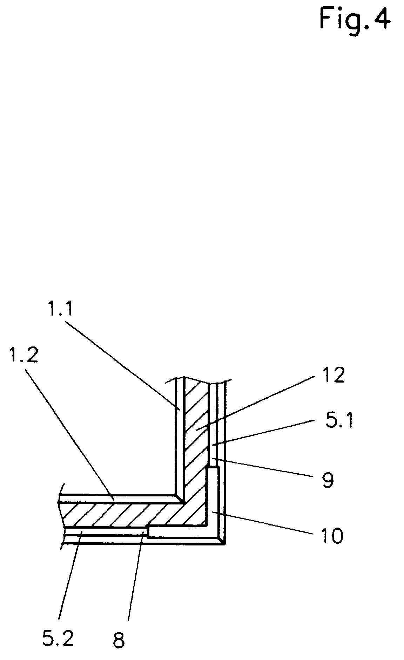

In Figur 4 ist eine Ausschnittsvergrößerung einer räumlichen Ansicht gezeigt, wobei eine Verbindungsecke auf einander benachbarte Schwertelemente 5.1, 5.2 aufgesetzt ist. Die Rahmenelemente 1.1, 1.2 sind mit gestrichelten Linien angedeutet, wobei zu erkennen ist, daß der kürzere Schenkel 16 auf der dem Faltenpack 2 abgewandten außenseitigen Begrenzungswandung 15 der Nut 11 aufliegt und als Anschlag zur Positionierung des Schwertelements 5.1, 5.2 in der Nut 11 des Rahmenelements 1.1, 1.2 ausgebildet ist. Der längere Schenkel 17 ragt teilweise in die Nut 11 hinein und ist von der aus Polyurethan bestehenden Vergußmasse 12 dichtend umschlossen.

## Patentansprüche

1. Filtereinsatz, umfassend einen Rahmen (1) aus zähhartem Werkstoff, der einen Faltenpack (2) umfangsseitig dichtend umschließt, wobei der Rahmen (1) aus zusammensteckbaren, plattenförmigen Rahmenelementen besteht und mit einem entlang der Unter- und/ oder Oberkante umfangsseitig umlaufenden Schwert (3) versehen ist und wobei das Schwert (3) in einem gitterförmigen Halter (6) von U-förmigem Profil eintauchbar und darin durch ein zähflüssiges Dichtmittel festlegbar ist, **dadurch gekennzeichnet**, daß das Schwert (5) durch leistenförmige Schwertelemente (5.1, 5.2, ...) gebildet ist, daß jedes Schwertelement (5.1, 5.2, ...) mit einem Rahmenelement (1.1, 1.2, ...) verbunden ist und daß die einander benachbarten Enden (8, 9) der Schwertelemente (5.1, 5.2, ...) durch Verbindungsecken (10) dichtend aneinander festgelegt sind.

2. Filtereinsatz nach Anspruch 1, dadurch gekennzeichnet, daß die Rahmenelemente (1.1, 1.2, ...) und die Schwertelemente (5.1, 5.2, ...) einstückig ineinander übergehen und materialeinheitlich ausgebildet sind.

3. Filtereinsatz nach Anspruch 1, dadurch gekennzeichnet, daß die Schwertelemente (5.1, 5.2, ...) separat von den Rahmenelementen (1.1, 1.2, ...) erzeugt und mit der Unter- (3) und/ oder Oberkante (4) der Rahmenelemente (1.1, 1.2, ...) dichtend verbunden sind.

4. Filtereinsatz nach Anspruch 3, dadurch gekennzeichnet, daß die Unter- (3) und/ oder Oberkante (4) eine entgegen dem Faltenpack (2) offene Nut (11) aufweist, daß die Schwertelemente (5.1, 5.2, ...) dichtend in den Nuten (11) angeordnet sind und daß die Nuten (11) eine zähharte Vergußmasse (12) zur Anbindung der Schwertelemente (5.1, 5.2, ...) enthalten.

5. Filtereinsatz nach einem der Ansprüche 1 bis 4, dadurch gekennzeichnet, daß die Verbindungsecken (10) ein im wesentlichen U-förmiges Profil aufweisen und die Schwertelemente (5.1, 5.2, ...) auf der den Rahmenelementen (1.1, 1.2, ...) abgewandten Seite umgreifen.

6. Filtereinsatz nach einem der Ansprüche 1 bis 5, dadurch gekennzeichnet, daß die Verbindungsecken (10) aus polymerem Werkstoff bestehen und mit einem Dichtmittel zumindest teilweise ausgefüllt sind.

7. Filtereinsatz nach einem der Ansprüche 3 bis 6, dadurch gekennzeichnet, daß die Verbindungsecken (10) voneinander abweichende Schenkellängen (13, 14) aufweisen, daß der kürzere Schenkel (16) auf der dem Faltenpack (2) abgewandten außenseitigen Begrenzungswandung (15) der Nut (11) aufliegt und als Anschlag zur Positionierung des Schwertelements (5.1, 5.2, ...) in der Nut (11) des Rahmenelements (1.1, 1.2, ...) ausgebildet ist und daß der längere Schenkel (17) in die Nut (11) hineinragt und dichtend von der Vergußmasse (12) umschlossen ist.

8. Filtereinsatz nach einem der Ansprüche 1 bis 7, dadurch gekennzeichnet, daß die Schwertelemente (5.1, 5.2, ...) von den Schenkeln (16, 17) der Verbindungsecken (10) unter elastischer Vorspannung anliegend berührt sind.

9. Filtereinsatz nach einem der Ansprüche 1 bis 8, dadurch gekennzeichnet, daß die Schwertelemente (5.1, 5.2, ...) und die Verbindungsecken (10) eine vormontierbare Einheit bilden.

10. Filtereinsatz nach einem der Ansprüche 1 bis 9, dadurch gekennzeichnet, daß die Schwertelemente (5.1, 5.2, ...) aus eloxiertem Aluminium bestehen.
